# EUROPEAN PATENT SPECIFICATION

(11) **EP 3 241 432 B1**
(45) Date of publication and mention of the grant of the patent: **08.07.2020**
(21) Application number: 16168356.0
(22) Date of filing: 04.05.2016
(51) Int. Cl.: A01J 25/11

(54) **METHOD FOR PREPARING A CURD BODY AND A FORMING AND MOULDING UNIT**
VERFAHREN ZUR HERSTELLUNG EINES KÄSEBRUCHSKÖRPERS SOWIE FORMUNGS- UND PRESSEINHEIT
PROCÉDÉ DE PRÉPARATION D'UN CORPS DE CAILLÉ ET UNITÉ DE FORMAGE ET DE MOULAGE

(43) Date of publication of application: 08.11.2017
(73) Proprietor: Tetra Laval Holdings & Finance S.A., 1009 Pully (CH)
(72) Inventor: SPIJKERMAN, Harrie, 8191 LP Wapenveld (NL)
(74) Representative: Tetra Pak - Patent Attorneys SE

(56) References cited:
- FR-A- 1 532 252
- US-A- 4 420 296

## Description

### Technical field

The present invention relates to a method for preparing a curd body used in cheese making, and to a forming and moulding unit for preparing such curd body.

### Background of the invention

Industrial cheese making is typically carried out by transforming a precompressed curd body (also referred to as a curd bed) into cut off portions of the curd body (also referred to as curd blocks), and transferring the curd blocks into a mould, where each curd block is compressed into a cheese.

For example, semi-hard and hard cheeses are mostly created from a pre-shaped curd block which has been built up from a curd and whey mixture supplied by a curdmaking machine (such as e.g. Tetra Pak Cheese Cheese Vat OST). The curd and whey mixture has been fed to a so called forming and moulding machine in which the curd mass of the curd and whey mixture has been compressed into a preshaped and stable curd bed, which subsequently has been cut into the pre-shaped curd blocks. The pre-shaped curd blocks are then transferred into a respective mould in a moulding system, in which each curd block is pressed to a cheese body with enclosed rind. An example of such cheese making machine is the Tetra Pak Casomatic System.

In the process of transforming the curd bed into a cheese body, an outer surface (i.e. an enveloping surface), or outer portion of the curd bed, and the respective curd blocks formed from the curd bed, may not be stable and is sensitive for introduction of defects to the surface and the portion around the surface (the portion being e.g. up to a few cm below the surface). The defects may for example be open or weak spots (e.g. a hole) in the enveloping surface, and so called pinholes in the body just below the surface. This type of defects may be a source of infection later on during cheese ripening, e.g. by means of mold growth. Furthermore, if the surface with the defect is exposed to air during the process, air can enter into the curd body, and form e.g. pinholes.

Furthermore, the pinholes (that is, small air-filled openings in the curd body and later cheese body) can weaken the rind of the cheese, and during ripening of the cheese, the rind may (typically in the vicinity of a pinhole) open up and thereby cause crack formation in the cheese body. Furthermore, during ripening of the cheese, gas may be formed from cheese cultures, and the gas may increase the size of the air-filled pockets and even cause interconnected air and gas-filled pockets, and thereby increasing crack formation. Also, pinholes and other large air (and gas) filled pockets can result in that pieces of the cheese later break off (e.g. during industrial slicing of the cheese into consumer ready cheese slices) which e.g. impairs the appearance of the pre-packed cheese in the retail store. Further background art is reflected by patent document FR1532252A.

Thus, there is a need in the industry for an improved method for preparing a curd body.

### Summary of the invention

It is an object of the present invention to improve the current state of the art, to at least partly solve the above problems and to provide an improved curd body. These and other objects are achieved by a method for preparing a curd body, and a forming and moulding unit for preparing a curd body.

According to a first aspect of the present invention, a method according to claim 1 for preparing a curd body used in cheese making is provided. The method comprises the steps of:
feeding a drainage column with a curd and whey mixture, whereby said curd and whey mixture will be compressed and form a curd body;
forming at least a portion of the curd body with a profiled surface having a pattern of alternating ridges and grooves.

By forming (or modifying or altering) a portion of the curd body by a profiled surface, the formation of defects such as e.g. pinholes, can significantly be reduced. The pattern of ridges and grooves forces curd grains inside the portion of the curd body to come closer to each other. Thereby, fusing of individual curd grains will occur, which makes the corresponding surface more rigid (and more enclosed) and thereby less sensitive for e.g. cracks, and other defects such as the formation of pinholes. In other words, the portion which has been subjected to the profiled surface will become more rigid and will better withstand stress in downstream processes. This also has the advantages of improved hygiene, and less microbiological contaminations.

The pattern of alternating ridges and grooves may e.g. be formed of horizontally arranged ridges and grooves. The pattern may be a fish-bone or zig-zag pattern. The pattern may also be comprised of a circularly shaped ridge which increases its distance from a center as it extends radially outwards from the center, and thus exhibits a pattern of alternating ridges and grooves at least in the radial direction of the surface.

The ridges are preferably top-shaped, e.g. having a triangular cross section. Hereby, the curd grains will be pressed sideways, as well as into the corresponding portion. By having top-shaped ridges, (e.g. with a triangular cross section), whey can be transferred from the curd body surface into the grooves and thereby provide for a space where the curd particles in the curd body surface can come closer to each other, and thus result in an improved fusing of the curd particles. Furthermore, if air is present in the proximity of the curd body surface, the air may escape into the grooves and may thus be prevented from being trapped in the compressed cheese which is formed later. To improve the above described transport of whey and air, the grooves may be provided with holes for deaeration and drainage. The holes is preferably arranged in the bottom of the grooves.

According to at least one example embodiment, said pattern of alternating ridges and grooves comprises at least one continuous ridge, and at least one continuous groove. According to at least one example embodiment, at least one continuous ridge, and at least one continuous groove, will extend to an edge of the corresponding surface.

The forming of the portion of the curd body may e.g. be carried out by pressing the profiled surface into contact with the portion of the curd body. Thus, a mirrored pattern (although initially not as deep) will be imprinted into the corresponding portion of the curd body.

The drainage column may be vertically arranged, whereby the curd body is formed and compressed by holding the curd and whey mixture in the drainage column for a sufficient time whereby whey will be drained out of the curd body, and the force of gravity (in combination with the hydraulic force of the whey flow) acts on the curd body. Alternatively, or additionally, the curd body is compressed by some external compression means.

According to the invention, said curd body comprises a bottom side resting on a resting surface of said drainage column, and at least one lateral side connected to said bottom side, the method further comprising the steps of:
transferring at least a portion of the lateral side, and said bottom side of the curd body into a dosage chamber having a dosing plate, such that said bottom side of the curd body rests on said dosing plate.

Hereby, the curd body may, at least partly, be transferred out of the drainage column.

The dosing plate may move further away from the drainage column in order to withdraw more of the curd body out of the drainage column.

According to the invention, the profiled surface is at least comprised in said dosing plate, whereby said bottom side of the curd body will be formed by said pattern of alternating ridges and groves.

Thus, the method comprises the step of forming said bottom side of the curd body by the profiled surface in the dosing plate.

Hereby air entrapment is reduced and potentially presence of whey pockets (whey-filled pockets in the curd body e.g. close to the surface) decreased, and the related problems are reduced.

Thus, the dosing plate has a surface profile with alternating ridges and grooves. According to at least one example embodiment, the dosage plate has a top side, facing the bottom side of the curd body, which top side comprises the profiled surface. Thus, the surface having alternating ridges and grooves are comprised in the top side said dosage plate, said top side configured to face the bottom side of said curd bed.

Thus, air trapped between the bottom side of the curd body and the top side of the dosing plate has more time to escape via the grooves of the profiled surface and may furthermore be transferred thorough holes (if present) in the grooves, as the curd body (at least initially) rests on the ridges, and thereby allows for air channels to be formed in the grooves.

Furthermore, the weight of the curd body (i.e. the curd body in the drainage column as well as the curd body in the dosage chamber) is carried (at least initially) by the ridges (i.e. less total carrying surface compared to a dosage plate having a planar surface), which will enhance the effect of forcing curd grains together. Furthermore, as the bottom side rests on a relatively smaller carrying surface, less stress is created when removing the bottom side of the curd body from the dosing plate.

Another effect of the grooves is that the drainage of whey is improved (as whey can flow in the grooves) from the bottom side of the curd body, thus allowing a better compression of the bottom side of the curd body bed stimulating fusing and deformation of the curd grains to a more rigid and less open bottom side of the curd body. Moreover, owing to the grooves, the whey may to a lesser extent act as "glue" holding the bottom side of the curd body to the dosing plate.

According to at least one example embodiment, the profiled surface is at least comprised in a lateral chamber side of said dosage chamber, whereby the lateral side of said curd body will be formed by said pattern of alternating ridges and grooves.

Thus, the method comprises the step of forming said lateral side of the curd body by the profiled surface in the lateral chamber side.

Thus, the lateral side of the portion of the curd body may become more rigid due to reasons stated above.

According to at least one example embodiment, the method comprises the step of pressing said lateral chamber side towards and against the lateral side of the curd body.

According to at least one example embodiment, the dosing plate and the lateral side of the dosage chamber may each comprise a profiled surface having alternating ridges and grooves.

According to at least one example embodiment, the method further comprise the step of cutting through said curd body to form a cut off portion of the curd body having a top side.

According to at least one example embodiment, said step of cutting comprises cutting through the curd body with a cutting tool having a cutting tool top side and a cutting tool bottom side, and wherein said resting surface is comprised in said cutting tool top side, and said profiled surface is comprised in said cutting tool bottom side.

Thus, the method comprises the step of forming said top side of a portion of the curd body by the profiled surface in the cutting tool bottom side.

According to at least one example embodiment, the method further comprises the step of pressing said top side of the cut off portion of the curd body against the profiled surface of the cutting tool bottom side, whereby said top side will be formed by said pattern of alternating ridges and grooves.

Thus, preferably after cutting through the curd body (which may be referred to as closing the cutting tool) and cutting off the cut off portion of the curd body, the dosing plate is pushed upwards, towards the cutting tool bottom side, with a controllable force for a relatively short time. This will make the top side of the cut off portion of the curd body to be pushed up towards the cutting tool bottom side. Thus, the pattern of alternating ridges and grooves will force the curd grains at the top side of the curd body portion closer to each other (as described above).

Another effect of the grooves is that whey can drain off from the top side of the cut off portion of the curd body, thus allowing a better compression and more closed pushing of curd particles/grains stimulating fusing and deformation of the curd grains to a more rigid and less open cut off portion of the curd body.

Another effect is that profiled surface of the cutting tool allows better access of air to the area between the cutting tool and the top side of the cut off portion of the curd body when it is lowered down by the dosing plate (i.e. it has been pressed in the other direction by the dosing plate). The cut off portion of the curd body is lowered as it is replaced by air. If air is more easily transported into this area the stress induced to the cut off portion of the curd body as it disconnects from the bottom side of the cutting tool is reduced, resulting in less deformation.

The curd body in the drainage column (and in the dosage chamber before cutting with the cutting tool) may also be referred to as a curd bed. The curd bed may thus be a continuous curd body. Thus, to summarize, the continuous curd body, or curd bed, may be at least partly transferred out of the drainage column such that a bottom side of the curd body (or curd bed) rests on the dosing plate. The curd body or the curd bed may subsequently be cut off whereby a portion of the curd body is separated from the remaining curd body. The separate portion of the curd body may be referred to as a portion, such as a cut off portion, of the curd body, or as a curd block, while the remaining part or portion of the curd body (i.e. the part or portion which is above the cutting tool) still is part of the curd bed. Thus, when referring to forming at least a portion of the curd body with a profiled surface, the portion of the curd body may refer to the (continuous) curd body (i.e. curd bed) or to a separate curd body portion (i.e. curd block).

According to at least a second aspect of the present invention, a forming and moulding unit according to claim 6 for preparing a curd body used in cheese making is provided. The forming and moulding unit comprises:
a drainage column comprising a resting surface and means for receiving a curd and whey mixture, said drainage column being configured to transform said curd and whey mixture into a curd body resting on said resting surface;
a dosage chamber having a lateral chamber side, and a dosing plate being configured for receiving a bottom side of the curd body; and
a cutting tool for cutting through the curd body to form a cut off portion of the curd body;
wherein at least one surface on the cutting tool, the lateral chamber side of the dosage chamber, and the dosing plate comprises a profiled surface having a pattern of alternating ridges and grooves, for forming at least a portion of the curd body with said profiled surface.

Effects and features of this second aspect of the present invention are largely analogous to those described above in connection with the first aspect of the inventive concept. Embodiments mentioned in relation to the first aspect of the present invention are largely compatible with the second aspect of the invention.

According to at least one example embodiment, said profiled surface comprises top-shaped ridges.

The ridges may have a triangularly shaped cross section.

According to at least one example embodiment, said pattern of alternating ridges and grooves comprises at least one continuous ridge, and at least one continuous groove.

According to at least one example embodiment, the at least one continuous ridge, and the at least one continuous groove, extend over an edge of the corresponding surface. Thus, outside air can flow into the grooves, and whey can flow out from the corresponding surface.

According to at least one example embodiment, the at least one continuous groove has at least one hole, or through-hole, in a lower side (e.g. the bottom) of the groove. Thus, air and whey can flow out from the grooves though the hole (and air from the outside (if present) can be directed to flow into the grooves).

According to the invention, said dosing plate comprises a top side configured to face the bottom side of the curd body, wherein said profiled surface is at least comprised in said top side of said dosing plate for forming the bottom side of the curd body with the pattern of the alternating ridges and grooves.

According to at least one example embodiment, said cutting tool comprises a cutting tool bottom side configured to face a top side of the cut off portion of the curd body, wherein said profiled surface is at least comprised in said cutting tool bottom side for forming a top side of the cut off portion of the curd body with the pattern of the alternating ridges and grooves.

According to at least one example embodiment, said lateral chamber side is configured to face the lateral side of the portion of the curd body (i.e. a portion of either the curd body or a portion of the cut off portion of the curd body), wherein said profiled surface is at least comprised in said lateral chamber side of said dosage chamber for forming the lateral side of the portion of the curd body with the pattern of the alternating ridges and grooves.

According to at least one example embodiment, said cutting tool comprises a cutting tool top side, and wherein said resting surface is comprised in said cutting tool top side.

According to at least one example embodiment, said forming and moulding unit comprises a through-hole in at least one groove in the profiled surface having a pattern of alternating ridges and grooves. The through-hole may e.g. be arranged in a lower side (e.g. at the bottom) of the groove. According to at least one example embodiment, a plurality of holes, or through-holes, are provided in the groove or grooves.

According to at least one example embodiment, the size of the pattern of alternating ridges and grooves in a direction perpendicular to a plane extending over the profiled surface is between 0.5 mm and 5 mm, such as e.g. between 1 mm and 2 mm.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise.

### Brief description of the drawings

The above objects, as well as additional objects, features and advantages of the present invention, will be more fully appreciated by reference to the following illustrative and non-limiting detailed description of preferred embodiments of the present invention, when taken in conjunction with the accompanying drawings, wherein:
Fig. 1 is a perspective, at least partly schematically, view of a forming and moulding unit in accordance with at least one embodiment of the invention;
Fig. 2a and Fig. 2b are enlarged perspective views of details of the forming and mould unit of Fig. 1, showing different states of the process, in accordance with at least one embodiment of the invention;
Fig. 3 is an enlarged perspective view of details of the forming and mould unit of Fig. 1, showing three different options for providing a profiled surface having a pattern with alternating ridges and grooves, in accordance with at least one embodiment of the invention;
Fig. 4 is an enlarged cross sectional view of a part of a profiled surface with its pattern of alternating ridges and grooves, in accordance with at least one embodiment of the invention; and
Fig. 5 is a flow-chart schematically illustrating at least one example embodiment of the invention.

### Detailed description of preferred embodiments of the invention

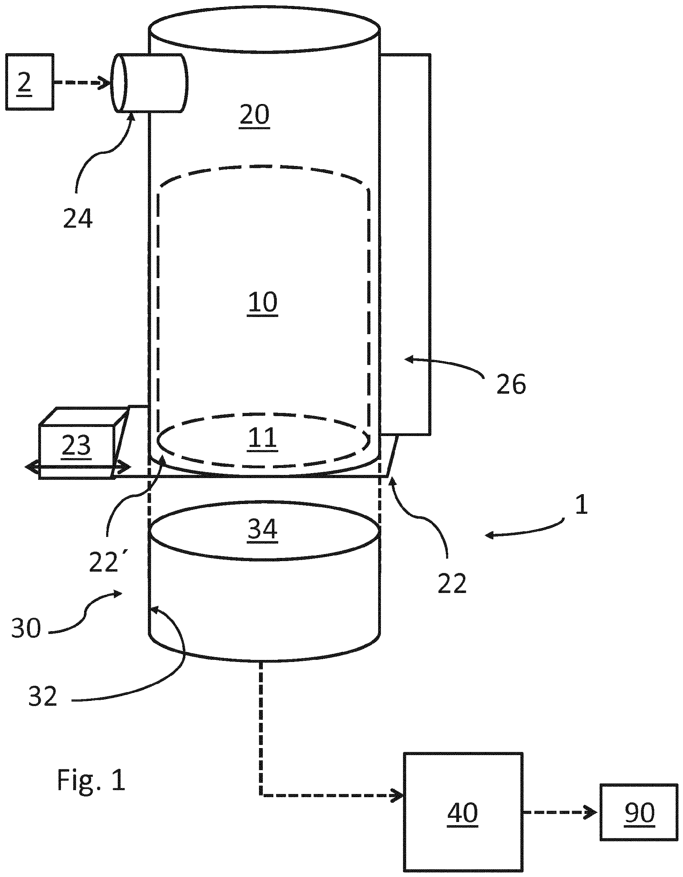

Fig. 1 shows a forming and moulding unit 1 for preparing a curd body 10 from a curd and whey mixture 2. The curd body 10 is typically an intermediate product in making cheese from the curd and whey mixture 2. The forming and moulding unit 1 comprises a drainage column 20 comprising a resting surface 22', here comprised in a top side 22' of a cutting tool 22 (also referred to as a cutting tool top side 22'), and means 24 for receiving the curd and whey mixture 2, here embodied as a single inlet 24 (of course, the curd and whey mixture may be fed to the drainage column 20 by other means such as e.g. more than one inlet, e.g. by separate inlets for the curd and the whey). The drainage column 20 in Fig. 1, further comprises means 23 for moving the cutting tool 22 transversely out and in from the drainage column 20 in order to cut off a portion of the curd body 10, and comprises means 26 for draining the whey from the curd and whey mixture 2, and the curd body 10, inside the drainage column 20. The means 26 for draining may comprise drainage valves (not shown), whereby the speed of which the whey is drained is controlled by adjusting the drainage valves and/or the positions of the drainage valves.

It should be noted as whey is drained from the drainage column 20, the curd and whey mixture 2 inside the drainage column 20 will become denser and the curd body 20 will be formed. The curd body 10 becomes denser further down in the drainage column 20 (i.e. closer to the resting surface 22') as more whey has been drained of, and due to gravity, as the drainage column 20 in Fig 1 is vertically arranged. Thus, the drainage column 20 is configured to transform the curd and whey mixture 2 into the curd body 10, wherein a bottom side 11 of the curd body 10 will rest on the resting surface 22' in the bottom of the drainage column 20.

It should be noted that the relative terms "top" and "bottom" used to describe different sides and surfaces are here to be interpreted in relation to the main extension of the drainage column 20. Typically, as the drainage column 20 is vertically arranged, a "top side" or a "top surface" will face up, opposite to the direction of the force of gravity, and a "bottom side" or a "bottom surface" will face down, in the same direction as the force of gravity. However, if the drainage column is arranged differently, e.g. by being horizontally arranged or by having a drainage column which are working in the opposite direction (i.e. with whey and curd mixture fed to the bottom of the drainage column, and the curd bed transferred away from the drainage column from the topside of the drainage column), and another or complementary pressing means to the force of gravity is used, the "top side" and "top surface" may as well be facing an upstream portion (i.e. a portion arranged upstream) of the drainage column 20 where e.g. the curd and whey mixture 2 is inserted. Correspondingly, the "bottom side" and "bottom surface" are facing in the opposite direction.

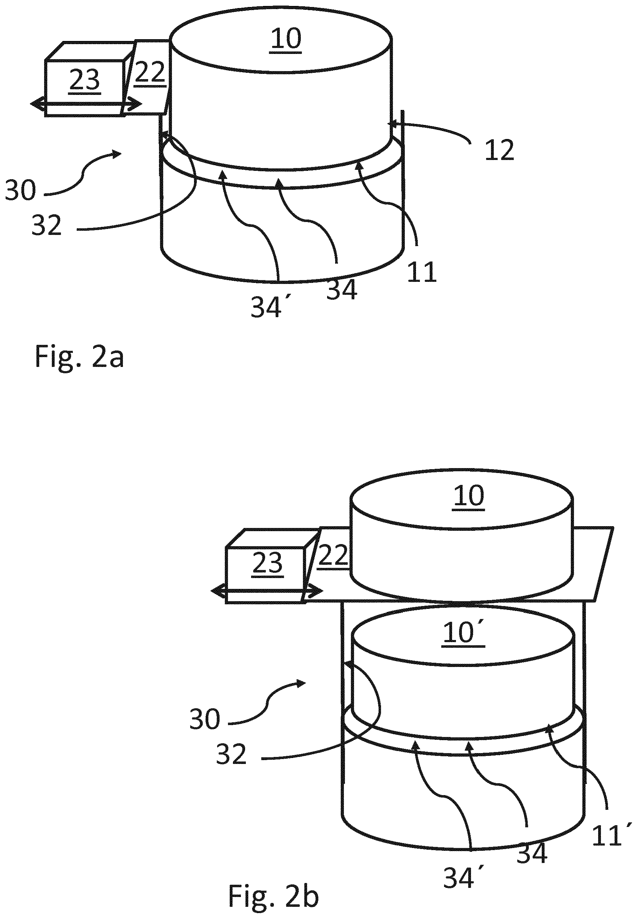

Downstream of resting surface 22', which in Fig. 1 is below the cutting tool 22, the forming and moulding unit 1 comprises a dosage chamber 30 having a lateral chamber side 32, and a dosing plate 34 which is movable along the lateral chamber side 32, inside the dosage chamber 30. The dosing plate 34, such as a top side of the dosing plate 34, is configured for receiving the bottom side of the curd body 10 (further described below with reference to Fig. 2a and Fig. 2b).

Further downstream of the dosage chamber 30, the downstream process(es) 40, e.g. comprising a moulding system, for completing the process of making a cheese 90 from the curd body 10, is schematically illustrated. In a moulding system for example, the curd body 10 is compressed by a compressing means into a cheese 90. In this process, the envelope surface of the curd body 10 will be compressed such that a rind of compressed curd particles will be formed around the cheese/curd body. Thus, the forming and moulding unit 1, and the schematically illustrated downstream process(es), such as e.g. the moulding system, may together be referred to as a manufacturing equipment for making cheese.

The process of transferring the curd body 10 to the dosage chamber 30, adapting the size of the portion of the curd body 10 which are to be cut off, and subsequently cutting a portion of the curd body 10 by the cutting tool 22 will now be described with reference to Fig. 2a and Fig. 2b, each showing an enlarged view of the curd body 10, the cutting tool 22 and the means 23 for moving the cutting tool 22, and the dosage chamber 30.

In Fig. 2a, the cutting tool 22 has been moved out from the interior of the drainage column 20 by the means 23 for moving the cutting tool 22. The means 23 may be any controllable motor or actuator known in the art, e.g. an electric, hydraulic or pneumatic motor or actuator coupled to the cutting tool 22. Thus, the bottom side 11 of the curd body 10 (which is only partly shown) is no longer resting on the resting surface 22', but has been transferred to the top side 34' of the dosing plate 34. Thus, a transferred portion of the curd body 10 (i.e. at least a portion of a lateral side 12 connected to the bottom side 11, and the bottom side 11 of the curd body 10) has left the interior of the drainage column 20, and is instead inside the dosage chamber 30. The dosing plate 34, now carrying the curd body 10, may be moved inside the dosage chamber 30, such as e.g. downwardly in a direction away from the drainage column 20, in order to adapt the size of the curd body 10 which is to be cut off.

In Fig. 2b, cutting tool 22 has been moved into the interior of the drainage column 20 by the means 23 for moving the cutting tool 22, and has cut through the curd body 10 and thereby cut off a portion 10' of the curd body 10. Furthermore, in Fig. 2b, the dosing plate 34 has been moved further away from the cutting tool 22. Thus, the bottom side 11' of the cut body curd body 10' is resting on the top side 34' of the dosing plate 34, and the bottom side of the curd body which was not cut off, is resting on the resting surface 22' (i.e. here, the top side 22' of the cutting tool 22).

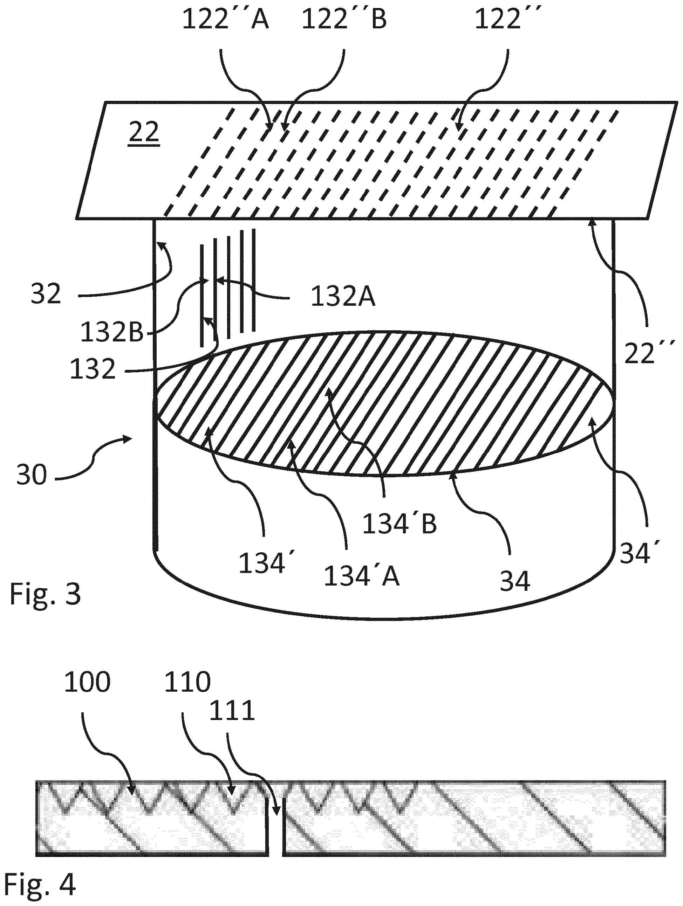

The process and the structural features need for making a profiled pattern in a portion of the curd body 10, 10' will now be described in more detail with reference to Fig. 3 showing an enlarged view of the cutting tool 22 and the dosage chamber 30.

In more detail, in Fig. 3 the top side 34' of the dosing plate 34, the lateral chamber side 32 of the dosage chamber 30, and a bottom side 22" of the cutting tool 22 (also referred to as a cutting tool bottom side 22") are each comprising a respective profiled surface 134', 132, 122", each profiled surface 134', 132, 122" is having a pattern of alternating ridges and grooves (a cross sectional view of the pattern are better shown in Fig. 4). Note that the first profiled surface 134' is indicating that the top side 34' of the dosing plate 34 comprises the pattern of alternating ridges and grooves, that the second profiled surface 132 is indicating that the lateral chamber side 32 comprises the pattern of alternating ridges and grooves, and that the third profiled surface 122" is indicating that the bottom side 22" of the cutting tool 22 comprises the pattern of alternating ridges and grooves). For each one of the profiled surfaces 134', 132, 122", only one respective ridge 134'A, 132A, 122"A and one respective groove 134'B, 132B, 122"B are indicated by a reference numeral. Also note that, for visibility reasons, the ridges and grooves are greatly exagerated.

Each one of the profiled surfaces 134', 132, 122" may form at least a respective portion of the curd body 10, 10' with a corresponding profile (the imprinted profile or resulting pattern in the portion of the curd body 10, 10' will be mirrored to the respective profiled surfaces 134', 132, 122"). It should be noted that the forming and moulding unit 1 of the invention need not to, but may, comprise a profiled surface 134', 132, 122" for all of the three surface 34', 32, 22". According to at least one example embodiment, at least one, such as e.g. at least two, of the three surfaces 34', 32, 22" comprises a respective profiled surface 134', 132, 122". However, to increase reading comprehension and for the sake of brevity, the three profiled surfaces 134', 132, 122" will now be described together.

In Fig. 3, the first profiled surface 134' is covering the whole top side 34' of the dosing plate 34. However, according to at least one example embodiment, only a portion of the top side 34' of the dosing plate 34 is covered with the first profiled surface 134'. The first profiled surface 134' may typically form the bottom side 11 of the curd body 10 (and the bottom side 11' of the cut off portion 10' of the curd body 10) with the pattern of the alternating ridges 134'A and grooves 134'B. As shown in Fig. 3, the ridges 134'A and the grooves 134'B are continuous and are each extending at least up to an edge of the top side 34' of the dosing plate 34. Hereby, whey may transported away from the first profiled surface 134'. To improve this effect at least one hole, such as a through-hole, may be arranged in the groove, e.g. at the bottom of the groove (see Fig. 4).

Moreover, in Fig. 3, the second profiled surface 132 is covering only a part of the lateral chamber side 132 of the dosage chamber 130. However, according to at least one example embodiment, a majority, such as e.g. over 60 % of the surface, is covered with the second profiled surface 132. The second profiled surface 132 may typically form a lateral side of the curd body 10 (and the lateral side of the cut off portion 10' of the curd body 10) with the pattern of the alternating ridges 132A and grooves 132B. As shown in Fig. 3, the ridges 132A and the grooves 132B are vertically arranged. However, according to one alternative example embodiment, the ridges and groves may be continuous and may extend around the circumference of the dosage chamber 130. It should be noted that the dosage chamber 30 may comprise means for pressing the chamber lateral side 32, and thus the second profiled surface 132, radially inwards against at least a portion of the curd body 10.

Furthermore, in Fig. 3, the third profiled surface 122" is covering the bottom side 22" of the cutting tool 22 (and is thus shown by a dotted line) over an area corresponding to at least the size of a top side of an cut off portion 10' of the curd body 10. However, according to at least one example embodiment, a majority (e.g. more than 60 %) of the bottom side 22" of the cutting tool 22 is covered with the third profiled surface 122". The third profiled surface 122" may typically form a top side of a portion of the curd body 10 (such as a top side of the cut off portion 10' of the curd body 10) with the pattern of the alternating ridges 122"A and grooves 122"B. As shown in Fig. 3, the ridges 122"A and the grooves 122"B are continuous and are each extending at least up to an edge of the bottom side 22" of the cutting tool 22. Hereby, whey may transported away from the third profiled surface 122". It should be noted that the dosage chamber 30 may comprise means for pressing the dosing plate 34 upwards and thereby the top side of the cut off portion 10' against the bottom side 22" of the cutting tool 22, and thus against the third profiled surface 122".

Hence, at least one surface on the cutting tool, the lateral chamber side of the dosage chamber, and the dosing plate comprises a profiled surface having a pattern of alternating ridges and grooves, for forming at least a portion of the curd body with said profiled surface.

That is, at least a portion (e.g. a surface or a side) of the curd body 10 (e.g. a surface or a side comprised in a portion of the curd body 10 which has not yet been cut off, and/or a surface or a side in a portion of the curd body 10' which has been cut off from the remaining curd body 10) may thus be subjected to at least one of the profiled surfaces 134', 132, 122", in order to form that portion (e.g. the surface or the side) with the respective profiled surface 134', 132, 122".

Fig. 4 shows an enlarged cross sectional view of the pattern of the alternating ridges 100 (only one is indicated in Fig. 4) and grooves 110 (only one is indicated in Fig. 4). The pattern shown in Fig. 4 may be applied to any one of the three profiled surfaces, 134', 132, 122".

As shown in Fig. 4, the ridges 100 are top-shaped. In more detail the cross section of the ridges 100 are triangularly shaped. In the case of having a continuous ridge, that ridge may be described as an elongated top shaped ridge with a triangularly shaped cross section. The grooves 110 are intermediate to the ridges 100 (i.e. a groove is arranged between two ridges) and are thus shaped as a result of the top-shaped ridges 100, i.e. the grooves 110 are V-shaped. As shown in Fig. 4, the profiled surface may be arranged such that the ridges 100 do not extend beyond a plane extending over the original, or remaining, surface in which the profiled surface is comprised. Thus, the profiled surface may have been formed by etching or carving out the grooves. However, the alternative with having the ridges 100 extending beyond a plane extending over the original, or remaining, surface in which the profiled surface is comprised, is also within the concept of the invention. For such embodiments, the ridges may be have been formed by applying them to the respective surface.

The top-shaped ridges 100 will penetrate into a portion of the curd body 10, and may thereby push curd grains closer together. Hereby, fusing of individual curd grains will occur, which makes the corresponding surface more rigid (and more enclosed) and thereby less sensitive for e.g. cracks, and other defects such as the formation of pinholes. To enhance curd particles to move closer together and thus fuse better, whey can flow from the surface of the curd body into the grooves and possibly through the grooves to an outside of the grooves, e.g. by use of at least one thorugh-hole 111 arranged in at least one of the grooves.

The size of the pattern of alternating ridges and grooves in a direction perpendicular to a plane extending over the profiled surface is preferably between 0.5 mm and 5 mm, such as e.g. between 1 mm and 2 mm. That is, the size from a bottom of a groove 110 to a top of a ridge 100, is preferably between 0.5 mm and 5 mm, such as e.g. between 1 mm and 2 mm.

Of course, ridges with other top-shaped geometries are conceivable within the concept of the invention.

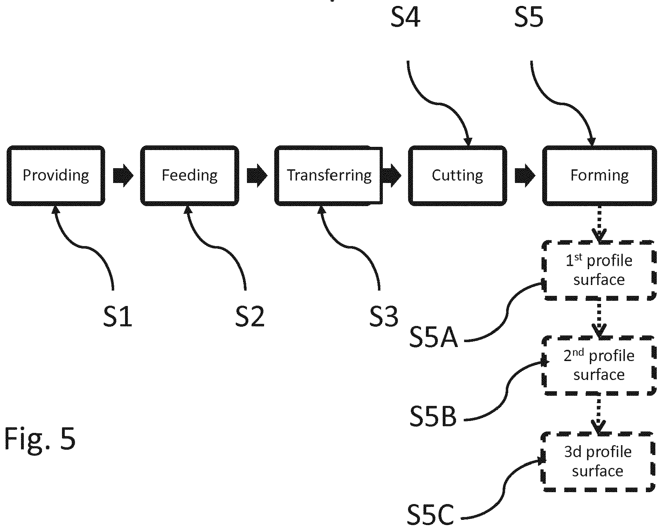

Fig. 5 is a flow-chart which schematically illustrates a method for preparing a curd body used in e.g. cheese making. The method will be described with reference to forming and moulding unit 1 of Fig. 1, and the enlarged views of parts of the forming and moulding unit 1 of Fig. 2-4.

In a first step S1, a curd and whey mixture 2 is provided (or alternatively, curd and whey are provided separately).

In a subsequent second step S2, the curd and whey mixture 2 is fed to a drainage column 20, whereby the curd and whey mixture 2 will be compressed to form a curd body 10 (as described with reference to Fig. 1).

In a third step S3 at least a portion of the lateral side 12, and the bottom side 11 of the curd body 10 (i.e. the above referred transferred portion) are transferred into the dosage chamber 30 such that the bottom side 11 of the curd body 10 rests on the dosing plate 34 of the dosage chamber 30. As explained above, this may be carried out by withdrawing the cutting tool 22 out of the interior of the drainage column 20, whereby the curd body 10 will fall a small distance until the bottom side 11 of the curd body 10 meets the dosing plate 34.

In a fourth step S4, the curd body 10 is cut through by the cutting tool 22 to form the cut off portion 10' of the curd body 10 having a top side.

In other words, the cutting tool 22 may in certain intervals be withdrawn to release a transferred portion of the curd body 10 to the dosage chamber 30. By lowering the dosing plate 34 in the dosage chamber 30, a greater portion of the curd body 10 will be transferred into the dosage chamber 30. The dosing plate 34 may be lowered to a pre-determined dosing height position at which position the desired amount of curd body is dosed (i.e. transferred) into the dosage chamber 30.

In a fifth step S5 (which may be carried out prior to the fourth step) at least a portion of the curd body 10 is formed with a profiled surface 134', 132, 122" having a pattern of alternating ridges 100 and grooves 110.

In a first alternative of the fifth step S5A, the bottom side 11 of the curd body 10 (or cut off portion of the curd body) is formed by the profiled surface 134' comprised in a top side 34' of the dosing plate 34, whereby the bottom side 11 of the curd body 10 is formed by the pattern of alternating ridges 100 and groves 110. This may e.g. be carried out as a result of step S3 and thus, prior to step S4. Furthermore, the time which the bottom side of the curd body 10, or cut off portion of the curd body 10, is subjected to the profiled surface 134', may be extended in time as the cut off portion of the curd body 10 is moved into a mould by being transferred on said dosing plate 34. Alternatively or additionally, a pressing step similar to step S5C may be used.

In a second alternative of the fifth step S5B, the lateral side 12 of the curd body 10 (or cut off portion of the curd body) is formed by the profiled surface 132 comprised in lateral chamber side 32 of said dosage chamber 30, whereby the lateral side 12 of the curd body 10 is formed by the pattern of alternating ridges 100 and groves 110. This step may comprise pressing the lateral side 32 of the dosage chamber against the lateral side 12 of the curd body 10. This may e.g. be carried out prior to step S4. Alternatively or additionally, a pressing step similar to step S5C may be used.

In a third alternative of the fifth step S5C, the top side 12 of the cut off portion 10' of the curd body 10 is formed by the profiled surface 122" comprised in the bottom side 22" of the cutting tool 22, whereby the top side of the cut off portion 10' is formed by the pattern of alternating ridges 100 and groves 110. This step may comprise pressing dosing plate 34 towards the cutting tool 22, such that the bottom side 22" of the cutting tool 22 is pressed against the top side of the cut off portion 10' of the curd body 10 (this may be referred to as a pre-pressing step). The dosing plate 34 may e.g. be pressed upwards at controllable force for a relatively short time, such as e.g. approximately between 5 and 10 seconds.

As mentioned before, the method may comprise one (i.e. at least one or at least two) of the alternatives of the fifth step, i.e. one of the steps S5A, S5B, S5C. According to at least one example embodiment, the method comprises all of the alternatives of the fifth step, that is both step S5A, step S5B and step S5C.

It should be noted that the curd body 10 inside the drainage column may be referred to as a curd bed, or a pre-shaped compressed curd bed (i.e. pre-shaped by the form of the drainage column, and compressed due to the drainage and the force of gravity). Furthermore, the cut off portion 10' of the curd body 10 may be referred to as a curd block 10'. Moreover, the cutting tool 22 may be referred to as a knife 22 or a sluice plate 22. The dosage chamber 30 may be referred to as a slide-bush or a cassette. The dosage chamber 30 typically has a similar size (i.e. similar area) as the drainage column 20.

The components of the forming and moulding unit 1 and the ridges 100 and grooves 110 may be manufactured and formed in materials typically used within the cheese making industry, e.g. materials which are easy to clean using hot water, chemicals, and mechanical force or the like.

The skilled person realizes that a number of modifications of the embodiments described herein are possible without departing from the scope of the invention, which is defined in the appended claims.

## Claims

1. Method for preparing a curd body (10) used in cheese making, said method comprising the steps of:
feeding a drainage column (20) with a curd and whey mixture (2), whereby said curd and whey mixture (2) will be compressed and form a curd body (10);
forming at least a portion of the curd body (10) with a profiled surface (134', 132, 122") having a pattern of alternating ridges and grooves (134'A, 134'B, 132A, 132B, 122"A, 122"B),
wherein said curd body (10) comprises a bottom side (11) resting on a resting surface (22') of said drainage column (20), and at least one lateral side (12) connected to said bottom side (11), the method further comprising the steps of:
transferring at least a portion of the lateral side (12), and said bottom side (11) of the curd body (10) into a dosage chamber (30) having a dosing plate (34), such that said bottom side (11) of the curd body (10) rests on said dosing plate (34), **characterized in that**
the profiled surface (134') is at least comprised in said dosing plate (34), whereby said bottom side (11) of the curd body (10) will be formed by said pattern of alternating ridges and groves (134'A, 134'B).

2. The method according to claim 1, wherein the profiled surface (132) is at least comprised in a lateral chamber side (32) of said dosage chamber (30), whereby the lateral side (32) of said curd body (10) will be formed by said pattern of alternating ridges and grooves (132A, 132B).

3. The method according to any one of claims 1-2, further comprising the step of cutting through said curd body (10) to form a cut off portion (10') of the curd body (10) having a top side (34').

4. The method according to claim 3, wherein said step of cutting comprises cutting through the curd body (10) with a cutting tool (22) having a cutting tool top side (22') and a cutting tool bottom side (22"), and wherein said resting surface (22') is comprised in said cutting tool top side (22'), and said profiled surface (122") is comprised in said cutting tool bottom side (22").

5. The method according to claim 4, further comprising the step of pressing said top side of the cut off portion of the curd body (10) against the profiled surface (122") of the cutting tool bottom side (22"), whereby said top side will be formed by said pattern of alternating ridges and grooves (122"A, 122"B).

6. A forming and moulding unit for preparing a curd body (10) used in cheese making, said forming and moulding unit comprising:
a drainage column (20) comprising a resting surface (22') and means for receiving a curd and whey mixture (2), said drainage column (20) being configured to transform said curd and whey mixture (2) into a curd body (10) resting on said resting surface (22');
a dosage chamber (30) having a lateral chamber side (32), and a dosing plate (34) being configured for receiving a bottom side of the curd body (10); and
a cutting tool (22) for cutting through the curd body (10) to form a cut off portion of the curd body (10);
wherein at least one surface on the cutting tool (22), the lateral chamber side (32) of the dosage chamber (30), and the dosing plate (34) comprises a profiled surface (134', 132, 122") having a pattern of alternating ridges and grooves (134'A, 134'B, 132A, 132B, 122"A, 122"B), for forming at least a portion of the curd body (10) with said profiled surface (134', 132, 122"), **characterized in that**
said dosing plate (34) comprises a top side (34') configured to face the bottom side of the curd body (10), wherein said profiled surface (134', 132, 122") is at least comprised in said top side (34') of said dosing plate (34) for forming the bottom side of the curd body (10) with the pattern of the alternating ridges and grooves (134'A, 134'B, 132A, 132B, 122"A, 122"B).

7. The forming and moulding unit according to claim 6, wherein said profiled surface (134', 132, 122") comprises top-shaped ridges (134'A, 132A, 122"A).

8. The forming and moulding unit according to any one of claims 6-7, wherein said pattern of alternating ridges and grooves (134'A, 134'B, 132A, 132B, 122"A, 122"B) comprises at least one continuous ridge, and at least one continuous groove.

9. The forming and moulding unit according to any one of claims 6-8, wherein said cutting tool (22) comprises a cutting tool bottom side (22") configured to face a top side of the cut off portion of the curd body (10), wherein said profiled surface (122") is at least comprised in said cutting tool bottom side (22") for forming a top side of the cut off portion of the curd body (10) with the pattern of the alternating ridges and grooves (122"A, 122"B).

10. The forming and moulding unit according to any one of claims 6-9, wherein said lateral chamber side is configured to face the lateral side of the portion of the curd body (10), wherein said profiled surface (132) is at least comprised in said lateral chamber side (32) of said dosage chamber for forming the lateral side of the portion of the curd body (10) with the pattern of the alternating ridges and grooves (132A, 132B).

11. The forming and moulding unit according to any one of claims 6-10, further comprising a through-hole in at least one groove in the profiled surface (134', 132, 122") having a pattern of alternating ridges and grooves (134'A, 134'B, 132A, 132B, 122"A, 122"B).

12. The forming and moulding unit according to any one of claims 6-11, wherein the size of the pattern of alternating ridges and grooves (134'A, 134'B, 132A, 132B, 122"A, 122"B) in a direction perpendicular to a plane extending over the profiled surface (134', 132, 122") is between 0.5 mm and 5 mm, such as e.g. between 1 mm and 2 mm.

## Patentansprüche

1. Verfahren zur Herstellung eines bei der Käseherstellung verwendeten Käsebruchkörpers (10), wobei das Verfahren die folgenden Schritte umfasst:
Zuführen eines Käsebruch- und Molkegemischs (2) zu einer Entmolkungssäule (20), wodurch das Käsebruch- und Molkegemisch (2) komprimiert wird und einen Käsebruchkörper (10) bildet,
Formen mindestens eines Abschnitts des Käsebruchkörpers (10) mit einer profilierten Fläche (134', 132, 122"), die ein Muster aus abwechselnden Rippen und Nuten (134'A, 134'B, 132A, 132B, 122"A, 122"B) hat,
wobei der Käsebruchkörper (10) eine untere Seite (11), die auf einer Ruhefläche (22') der Entmolkungssäule (20) ruht, und mindestens eine mit der unteren Seite (11) verbundene laterale Seite (12) umfasst, wobei das Verfahren ferner die folgenden Schritte umfasst:
Transferieren mindestens eines Abschnitts der lateralen Seite (12) und der unteren Seite (11) des Käsebruchkörpers (10) in eine Dosierungskammer (30), die eine Dosierungsplatte (34) aufweist, so dass die untere Seite (11) des Käsebruchkörpers (10) auf der Dosierungsplatte (34) ruht, **dadurch gekennzeichnet, dass**
die profilierte Fläche (134') mindestens in der Dosierungsplatte (34) umfasst ist, wodurch die untere Seite (11) des Käsebruchkörpers (10) durch das Muster aus abwechselnden Rippen und Nuten (134'A, 134'B) geformt wird.

2. Verfahren nach Anspruch 1, wobei die profilierte Fläche (132) mindestens in einer lateralen Kammerseite (32) der Dosierungskammer (30) umfasst ist, wodurch die laterale Seite (32) des Käsebruchkörpers (10) durch das Muster aus abwechselnden Rippen und Nuten (132A, 132B) geformt wird.

3. Verfahren nach einem der Ansprüche 1 - 2, ferner umfassend den Schritt des Durchschneidens des Käsebruchkörpers (10), um einen abgeschnittenen Abschnitt (10') des Käsebruchkörpers (10) zu bilden, der eine obere Seite (34') hat.

4. Verfahren nach Anspruch 3, wobei der Schneidschritt das Durchschneiden des Käsebruchkörpers (10) mit einem Schneidwerkzeug (22) umfasst, das eine obere Schneidwerkzeugseite (22') und eine untere Schneidwerkzeugseite (22") hat, und wobei die Ruhefläche (22') in der oberen Schneidwerkzeugseite (22') umfasst ist und die profilierte Fläche (122') in der unteren Schneidwerkzeugseite (22") umfasst ist.

5. Verfahren nach Anspruch 4, ferner umfassend den Schritt des Pressens der oberen Seite des abgeschnittenen Abschnitts des Käsebruchkörpers (10) gegen die profilierte Fläche (122") der unteren Schneidwerkzeugseite (22"), wodurch die obere Seite durch das Muster aus abwechselnden Rippen und Nuten (122"A, 122"B) geformt wird.

6. Formungs- und Formbefüllungseinheit zur Herstellung eines bei der Käseherstellung verwendeten Käsebruchkörpers (10), wobei die Formungs- und Formbefüllungseinheit Folgendes umfasst:
eine Entmolkungssäule (20), die eine Ruhefläche (22') und Mittel zur Aufnahme eines Käsebruch- und Molkegemischs (2) umfasst, wobei die Entmolkungssäule (20) dazu ausgestaltet ist, das Käsebruch- und Molkegemisch (2) in einen auf der Ruhefläche (22') ruhenden Käsebruchkörper (10) umzuwandeln,
eine Dosierungskammer (30) mit einer lateralen Kammerseite (32) und einer Dosierungsplatte (34), die zur Aufnahme einer unteren Seite des Käsebruchkörpers (10) ausgestaltet ist, und
ein Schneidwerkzeug (22) zum Durchschneiden des Käsebruchkörpers (10), um einen abgeschnittenen Abschnitt des Käsebruchkörpers (10) zu bilden,
wobei mindestens eine Fläche an dem Schneidwerkzeug (22), der lateralen Kammerseite (32) der Dosierungskammer (30) und der Dosierungsplatte (34) eine profilierte Fläche (134', 132, 122") umfasst, die ein Muster aus abwechselnden Rippen und Nuten (134'A, 134'B, 132A, 132B, 122"A, 122"B) hat, um mindestens einen Abschnitt des Käsebruchkörpers (10) mit der profilierten Fläche (134', 132, 122") zu formen, **dadurch gekennzeichnet, dass**
die Dosierungsplatte (34) eine obere Seite (34') umfasst, die dazu ausgestaltet ist, der unteren Seite des Käsebruchkörpers (10) zugewandt zu sein, wobei die profilierte Fläche (134', 132, 122") mindestens in der oberen Seite (34') der Dosierungsplatte (34) umfasst ist, um die untere Seite des Käsebruchkörpers (10) mit dem Muster aus den abwechselnden Rippen und Nuten (134'A, 134'B, 132A, 132B, 122"A, 122"B) zu formen.

7. Formungs- und Formbefüllungseinheit nach Anspruch 6, wobei die profilierte Fläche (134', 132, 122") Rippen (134'A, 132A, 122"A) mit einer Spitze umfasst.

8. Formungs- und Formbefüllungseinheit nach einem der Ansprüche 6 - 7, wobei das Muster aus abwechselnden Rippen und Nuten (134'A, 134'B, 132A, 132B, 122"A, 122"B) mindestens eine durchgehende Rippe und mindestens eine durchgehende Nut umfasst.

9. Formungs- und Formbefüllungseinheit nach einem der Ansprüche 6 - 8, wobei das Schneidwerkzeug (22) eine untere Schneidwerkzeugseite (22") umfasst, die dazu ausgestaltet ist, einer oberen Seite des abgeschnittenen Abschnitts des Käsebruchkörpers (10) zugewandt zu sein, wobei die profilierte Fläche (122") mindestens in der unteren Seite des Schneidwerkzeugs (22") umfasst ist, um eine obere Seite des abgeschnittenen Abschnitts des Käsebruchkörpers (10) mit dem Muster aus den abwechselnden Rippen und Nuten (122"A, 122"B) zu formen.

10. Formungs- und Formbefüllungseinheit nach einem der Ansprüche 6 - 9, wobei die laterale Kammerseite dazu ausgestaltet ist, einer lateralen Seite des Abschnitts des Käsebruchkörpers (10) zugewandt zu sein, wobei die profilierte Fläche (132) mindestens in der lateralen Kammerseite (32) der Dosierungskammer umfasst ist, um die laterale Seite des Abschnitts des Käsebruchkörpers (10) mit dem Muster aus den abwechselnden Rippen und Nuten (132A, 132B) zu formen.

11. Formungs- und Formbefüllungseinheit nach einem der Ansprüche 6 - 10, ferner umfassend ein Durchgangsloch in mindestens einer Nut in der profilierten Fläche (134', 132, 122") mit einem Muster aus abwechselnden Rippen und Nuten (134'A, 134'B, 132A, 132B, 122"A, 122"B).

12. Formungs- und Formbefüllungseinheit nach einem der Ansprüche 6 - 11, wobei die Größe des Musters aus abwechselnden Rippen und Nuten (134'A, 134'B, 132A, 132B, 122"A, 122"B) in einer senkrecht zu einer sich über die profilierte Fläche (134', 132, 122") erstreckenden Ebene verlaufenden Richtung zwischen 0,5 mm und 5 mm, wie beispielsweise zwichen 1 mm und 2 mm, beträgt.

## Revendications

1. Procédé de préparation d'un corps de caillé (10) utilisé dans la fabrication du fromage, ledit procédé comprenant les étapes de :
alimentation d'une colonne d'évacuation (20) en un mélange (2) de caillé et de petit lait, moyennant quoi ledit mélange (2) de caillé et de petit lait sera comprimé et formera un corps de caillé (10) ;
formage d'au moins une partie du corps de caillé (10) à l'aide d'une surface profilée (134', 132, 122") ayant un motif de crêtes et de rainures alternées (134'A, 134'B, 132A, 132B, 122"A, 122"B),
dans lequel ledit corps de caillé (10) comprend un côté inférieur (11) reposant sur une surface d'appui (22') de ladite colonne d'évacuation (20), et au moins un côté latéral (12) relié audit côté inférieur (11), le procédé comprenant en outre les étapes de :
transfert d'au moins une partie du côté latéral (12), et dudit côté inférieur (11) du corps de caillé (10) dans une chambre de dosage (30) ayant une plaque de dosage (34), de telle sorte que ledit côté inférieur (11) du corps de caillé (10) repose sur ladite plaque de dosage (34), **caractérisé en ce que**
la surface profilée (134') est au moins comprise dans ladite plaque de dosage (34), moyennant quoi ledit côté inférieur (11) du corps de caillé (10) sera formé par ledit motif de crêtes et de rainures alternées (134'A, 134'B).

2. Procédé selon la revendication 1, dans lequel la surface profilée (132) est au moins comprise dans un côté de chambre latéral (32) de ladite chambre de dosage (30), moyennant quoi le côté latéral (32) dudit corps de caillé (10) sera formé par ledit motif de crêtes et de rainures alternées (132A, 132B).

3. Procédé selon l'une quelconque des revendications 1 et 2, comprenant en outre l'étape de coupe à travers ledit corps de caillé (10) pour former une partie découpée (10') du corps de caillé (10) ayant un côté supérieur (34').

4. Procédé selon la revendication 3, dans lequel ladite étape de coupe comprend la coupe à travers le corps de caillé (10) à l'aide d'un outil de coupe (22) ayant un côté supérieur (22') d'outil de coupe et un côté inférieur (22") d'outil de coupe, et dans lequel ladite surface d'appui (22') est comprise dans ledit côté supérieur (22') d'outil de coupe, et ladite surface profilée (122") est comprise dans ledit côté inférieur (22") d'outil de coupe.

5. Procédé selon la revendication 4, comprenant en outre l'étape de pressage dudit côté supérieur de la partie découpée du corps de caillé (10) contre la surface profilée (122") du côté inférieur (22") d'outil de coupe, moyennant quoi ledit côté supérieur sera formé par ledit motif de crêtes et de rainures alternées (122"A, 122"B).

6. Unité de formage et de moulage servant à préparer un corps de caillé (10) utilisé dans la fabrication du fromage, ladite unité de formage et de moulage comprenant :
une colonne d'évacuation (20) comprenant une surface d'appui (22') et un moyen de réception d'un mélange (2) de caillé et de petit lait, ladite colonne d'évacuation (20) étant configurée pour transformer ledit mélange (2) de caillé et de petit lait en un corps de caillé (10) reposant sur ladite surface d'appui (22') ;
une chambre de dosage (30) ayant un côté de chambre latéral (32), et une plaque de dosage (34) configurée pour recevoir un côté inférieur du corps de caillé (10) ; et
un outil de coupe (22) servant à couper à travers le corps de caillé (10) pour former une partie découpée du corps de caillé (10) ;
dans lequel au moins une surface sur l'outil de coupe (22), le côté de chambre latéral (32) de la chambre de dosage (30) et la plaque de dosage (34) comprend une surface profilée (134', 132, 122") ayant un motif de crêtes et de rainures alternées (134'A, 134'B, 132A, 132B, 122"A, 122"B), pour former au moins une partie du corps de caillé (10) à l'aide de ladite surface profilée (134', 132, 122"), **caractérisée en ce que**
ladite plaque de dosage (34) comprend un côté supérieur (34') configuré pour être en regard du côté inférieur du corps de caillé (10), ladite surface profilée (134', 132, 122") étant au moins comprise dans ledit côté supérieur (34') de ladite plaque de dosage (34) pour former le côté inférieur du corps de caillé (10) à l'aide du motif de crêtes et de rainures alternées (134'A, 134'B, 132A, 132B, 122"A, 122"B).

7. Unité de formage et de moulage selon la revendication 6, dans laquelle ladite surface profilée (134', 132, 122") comprend des crêtes triangulaires (134'A, 132A, 122"A).

8. Unité de formage et de moulage selon l'une quelconque des revendications 6 et 7, dans laquelle ledit motif de crêtes et de rainures alternées (134'A, 134'B, 132A, 132B, 122"A, 122"B) comprend au moins une crête continue, et au moins une rainure continue.

9. Unité de formage et de moulage selon l'une quelconque des revendications 6 à 8, dans laquelle ledit outil de coupe (22) comprend un côté inférieur (22") d'outil de coupe configuré pour être en regard d'un côté supérieur de la partie découpée du corps de caillé (10), dans laquelle ladite surface profilée (122") est au moins comprise dans ledit côté inférieur (22") d'outil de coupe pour former un côté supérieur de la partie découpée du corps de caillé (10) à l'aide du motif de crêtes et de rainures alternées (122"A, 122"B).

10. Unité de formage et de moulage selon l'une quelconque des revendications 6 à 9, dans laquelle ledit côté de chambre latéral est configuré pour être en regard du côté latéral de la partie du corps de caillé (10), dans laquelle ladite surface profilée (132) est au moins comprise dans ledit côté de chambre latéral (32) de ladite chambre de dosage pour former le côté latéral de la partie du corps de caillé (10) à l'aide du motif de crêtes et de rainures alternées (132A, 132B).

11. Unité de formage et de moulage selon l'une quelconque des revendications 6 à 10, comprenant en outre un trou traversant dans au moins une rainure dans la surface profilée (134', 132, 122") ayant un motif de crêtes et de rainures alternées (134'A, 134'B, 132A, 132B, 122"A, 122"B).

12. Unité de formage et de moulage selon l'une quelconque des revendications 6 à 11, dans laquelle la dimension du motif de crêtes et de rainures alternées (134'A, 134'B, 132A, 132B, 122"A, 122"B) dans une direction perpendiculaire à un plan s'étendant sur la surface profilée (134', 132, 122") est comprise entre 0,5 mm et 5 mm, par exemple entre 1 mm et 2 mm.
